# EUROPEAN PATENT SPECIFICATION

(11) **EP 3 127 423 B1**
(45) Date of publication and mention of the grant of the patent: **05.08.2020**
(21) Application number: 16180865.4
(22) Date of filing: 22.07.2016
(51) Int. Cl.: A01G 9/02

(54) **PLANT POT WITH MODULAR STRUCTURE**
POT POUR PLANTES AVEC STRUCTURE MODULAIRE
PFLANZENTOPF MIT MODULARER AUFBAU

(30) Priority: 07.08.2015 IT UB20152988
(43) Date of publication of application: 08.02.2017
(73) Proprietor: Ronca, Natalina, 05018 Orvieto (TR) (IT)
(72) Inventor: Ronca, Natalina, 05018 Orvieto (TR) (IT)
(74) Representative: Baldi, Claudio

(56) References cited:
- WO-A1-90/12493
- DE-U1-202006 014 083
- DE-U1-202012 011 315
- FR-A1- 2 592 272
- US-A1- 2008 120 905

## Description

The present patent application for industrial invention relates to a plant pot with modular structure. The reference sector is the cultivation of plants and/or flowers.

As it is known, the pots used for growing plants and/or flowers comprise a base and a side obtained in one piece with said base. The base and the side define a compartment wherein soil is introduced for growing the plants.

While growing, the plants need a higher amount of soil and it is therefore necessary to repot the plant in a larger and deeper pot. Such a transfer requires extracting the plant from the pot and placing it in a larger pot.

As it is known, the soil contained in the pot must be periodically changed because the mineral properties of the soil are depleted with the passing of time. In order to change the soil contained in a pot, it is necessary to extract the plant from the pot, remove the soil from the pot, replace the plant in the pot and finally fill the pot with new soil.

Some types of plants can be multiplied starting from a branch of the plant. In particular, it is necessary to cut into the bark of a branch of a generating plant with a knife, in such manner to create a notch, covering the area around the notch with a plastic bag. Soil must be put inside the bag in order to favor the formation of the roots. The bag can be removed when the roots are generated. The branch is cut and placed in a pot with the roots in the soil in order to obtain a new plant.

In all cases, i.e. when the pot is too small for the plant, when the soil must be changed, when it is necessary to place a branch in a pot, after the formation of roots, the plant must be handled with a stress for the plant that is directly proportioned to the size and the weight of the plant. Especially in the case of big plants, such an operation causes a stress for the plant, also in consideration of the fact that mechanical means must be used to grab and lift the plant.

It must be noted that the plants that are generated by cutting into a branch are extremely delicate and can be easily damaged, especially when the roots are uncovered in order to place the branch in the pot.

US2008/0120905 **discloses a sectional-type raised garden bed structure including a first wall section provided at an end with at least one mortise, a second wall section provided at an end with at least one tenon adapted to engage with the at least one mortise on the first wall section for connecting the first and the second wall section together.**

The purpose of the present invention is to remedy the drawbacks of the prior art by providing a plant pot with modular structure that allows for making operations, such as changing the soil contained in the pot or moving the pot to a larger pot, without directly attacking the plant.

Another purpose is to provide a plant pot with modular structure that is inexpensive, simple to install and use and capable of being enlarged using the same original base.

Another purpose is to provide a plant pot that allows for generating new plants starting from a branch, avoiding the need to repot the branch after the roots are generated.

The plant pot according to the present invention **is defined in claim 1. The plant pot** has a modular structure, wherein the sides can be easily and rapidly coupled and uncoupled both mutually and with the support base.

The peculiarity of said plant pot consists in the fact that it comprises:
- at least two panels to obtain said side, which are removably joined;
- coupling/uncoupling means for coupling or uncoupling said at least two panels.

The plant pot of the invention also comprises a base platform whereon the panels used to obtain the side of the plant pot are fitted.

The advantages of the plant pot of the invention are evident. Because of the provision of the coupling/uncoupling means of the panels it is possible to change the soil without extracting the plant from the compartment defined by said panels when the panels are joined. The same is true when a plant needs to be transferred with its root ball to a larger pot.

For the sake of clarity, the description of the plant pot according to the invention continues with reference to the attached drawings, which have a merely illustrative, not limiting value, wherein:
Fig. 1 is a side view of the plant pot according to the invention;
Fig. 2 is a top view of the plant pot of Fig.1;
Fig. 3 is a sectional view of Fig. 2 with plane III-III, where the walls are detached from the base platform;
Figs. 4A, 4B and 4C are an axonometric bottom view of three different panels used to obtain the side of the plant pot according to the invention;
Fig. 5 is a top view of another embodiment of the plant pot according to the invention;
Figs. 6A and 6B are a top view of two panels used to obtain the side of the plant pot according to Fig. 6;
Fig. 7 is an exploded view of the plant pot of the invention according to the embodiment wherein the side is obtained by overlapping two sides, a lower side fixed to the base, and an upper side to be inserted from up down and fitted to the lower side;
Fig. 8 is an exploded perspective view of the base platform of the base according to the invention and of two extensions;
Fig. 9 is a top view of an additional embodiment of the plant pot according to the invention;
Fig. 10 is an exploded top view of a base platform of the plant pot according to Fig. 9;

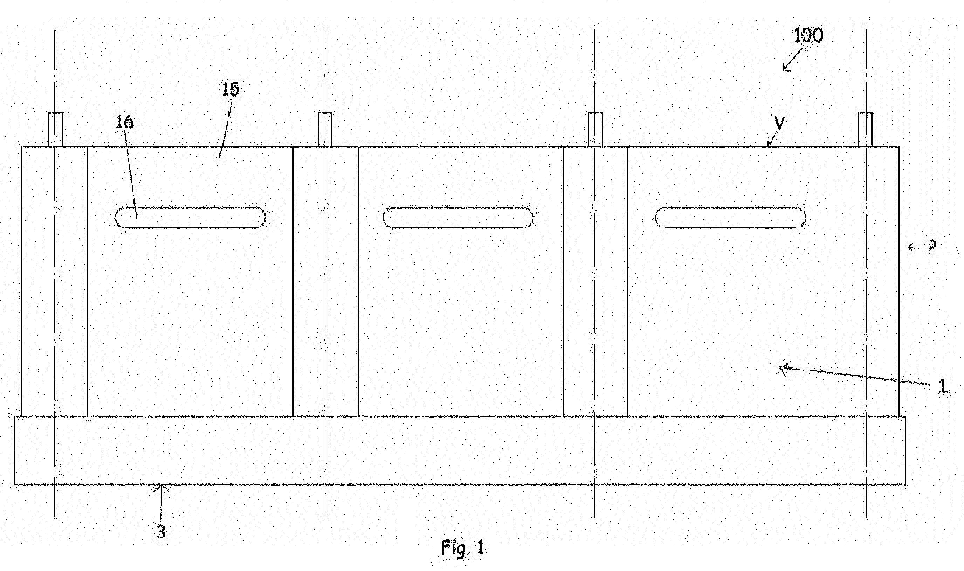

With reference to Figs. 1, 2 and 3, a pot for growing plants according to the present invention is disclosed, being generally indicated with reference numeral (100).

As shown in Fig. 1, the plant pot (100) has a modular structure comprising a side (P) that laterally defines a compartment (V) that contains the soil for growing the plants.

The plant pot (100) is shaped as a parallelepiped, whose sides are composed of a plurality of panels (1) that are removably joined in such a way to form the side (P).

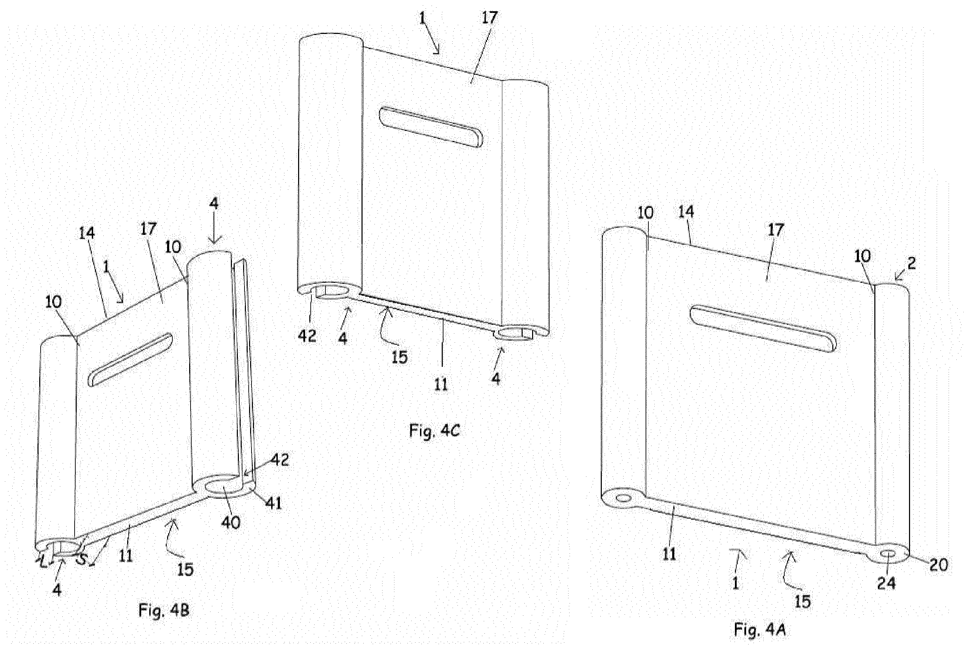

As shown in Figs. 4A, 4B and 4C, each panel (1) has a rectangular shape and comprises:
- an internal side (17) intended to be faced towards the compartment (V) of the plant pot,
- an external side (15) opposite to the internal side (17),
- a horizontal lower ending edge (11) and a horizontal upper ending edge (14) in parallel position, and
- two vertical ending edges (10).

As shown in Fig. 1, the panels (1) comprise a notch (16) obtained on the external side (15) of the panels (1) to grab said plant pot (100) firmly. In this way it will be easier for a user to lift either the plant pot (100) or the individual panels (1).

As shown in Figs. 4A, 4B and 4C, coupling/uncoupling means (2, 4) are provided in correspondence of the vertical ending edges (10) of the panel (1) in order to couple and uncouple said panels (1).

The coupling/uncoupling means (2, 4) comprise first coupling means (2) coupled with second coupling means (4). The first coupling means (2) comprise a cylindrical rod (20).

Each rod (20) of the first coupling means (2) comprises a central hole (24) in lower position.

The second coupling means (4) comprise a cylindrical housing (40) that receives the rod (20) of the first coupling means (2). Said housing (40) coincides with the internal channel of a tubular element (41) that is open on the top and on the bottom for allow for the introduction and the extraction of the rod (20). Said tubular element (41) comprises a longitudinal notch (42) with width (L) equal to the thickness (S) of the panel (1) in such manner to allow for the passage of the panel (1) joined to the rod (20). In order to prevent the rod (20) from being transversally removed from the housing (40), said longitudinal notch (42) has a width (L) lower than the diameter of the housing (40).

The first coupling means (2) are provided on both the vertical ending edges (10) of a panel (1) and the second coupling means (4) are provided on both vertical ending edges (10) of an additional panel (1) in adjacent position to the first panel. In view of the above, the panels (1) joined to the first coupling means (2) are adjacent to the panels (1) joined to the second coupling means (4).

Preferably the panels (1) and the coupling/uncoupling means (2, 4) are made of plastics and monolithic.

The longitudinal notch (42) can be positioned in such manner to lie on the same plane as the panel (1), as shown in Fig. 4B, or in orthogonal position, as for the panel of Fig. 4C. In the first case, the coupling/uncoupling means (2, 4) are used to fix coplanar panels (1) that belong to the same side as the side (P) of the plant pot (100), whereas in the second case the coupling/uncoupling means (2, 4) are used to fix panels (1) in orthogonal position that belong to adjacent sides of the side (P) of the plant pot (100). In fact, in the second case, the coupling/uncoupling means (2, 4) define an angle of the plant pot (100).

The compartment (V) used to plant the plant could be laterally defined by said side obtained with multiple panels (1) and by a paved area or by the ground on the bottom.

As shown in Figs. 1, 2 and 3, the plant pot (100) comprises a base platform (3) that is coupled with the panels (1) of the side (P) to define the compartment (V) on the bottom.

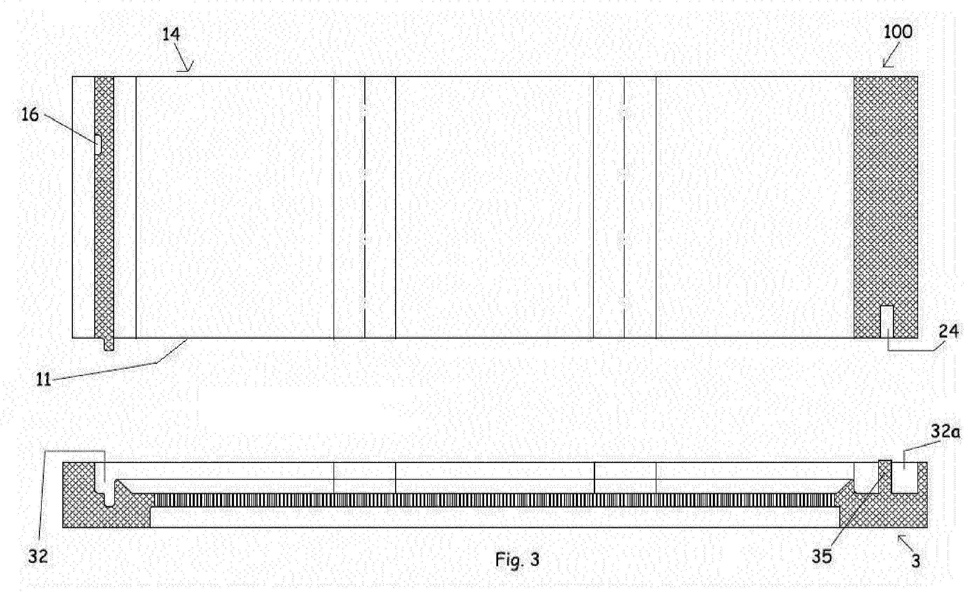

As shown in Fig. 3, the base platform (3) comprises a spaced set of upward-protruding vertical pins (35) in upper perimetric position; the spacing of said spaced set of vertical pins (35) is such that they can be engaged in the holes (24) of the rods (20) of the first coupling means (2) when a panel (1) is inserted from above and fixed to the base platform (3).

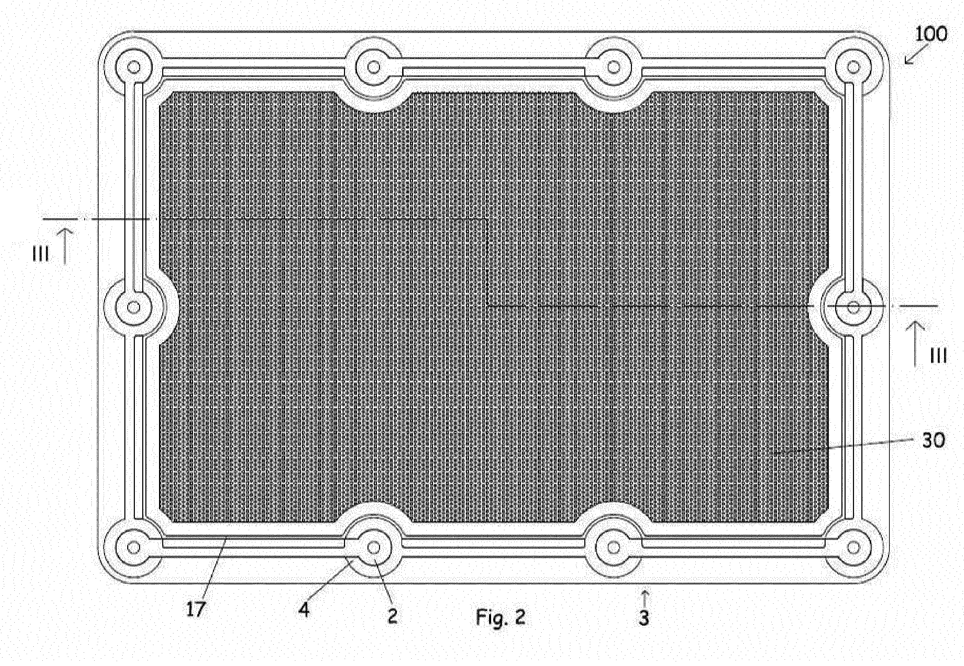

The base platform (3) comprises a groove (32) obtained in upper position on the perimetric edges (33). A spaced set of circular housings (32a) is obtained along said groove (32), in such manner that, when a panel (1) is inserted from above and fixed to the base platform (3), the lower ending edge (11) of the panels (1) is exactly housed in said groove (32), whereas the lower ending section of each tubular element (41) is exactly housed in said circular housings (32a). As shown in Fig. 2, the base platform (3) is covered by a dense set of water draining holes (30).

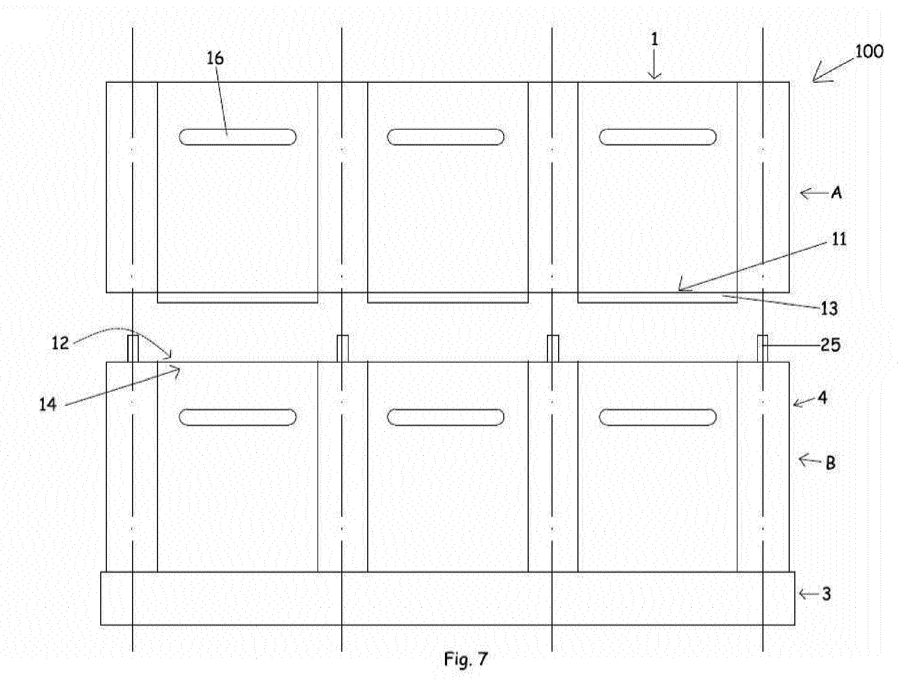

As shown in Fig. 7, the present invention provides for two slightly different sets of panels and, in particular:
- a first set of panels (A) intended to be coupled with the base platform (3), and
- a second set of panels (B) intended to be coupled with the base platform (3) and intended to act as support for an overhanging set of panels (A).

The first set of panels (A) is configured as the aforementioned panels (1), whereas the panels (1) of the second set of panels (B) are identical to the panels (1) of the first set of panels (A) except for the fact that it comprises a vertical pin (25) on top of each rod (20) of the first coupling means (2); said vertical pin (25) has a diameter equal to the hole (24) obtained at the base of said rods (20).

As shown in Fig. 7, the panels (1) of the second set of panels (B) comprise a first horizontal groove (12) on the upper ending edge (14), facing towards the inside of the plant pot (100) and the panels (1) of the first set of panels (A) comprise a second groove (13) on the lower ending edge (11), facing towards the outside of the plant pot (100), in such manner that when the panels (1) of the first set of panels (A) are disposed above the panels (1) of the second set of panels (B), the upper ending edge (14) of the panels (1) of the second set of panels (B) is disposed side by side to the lower ending edge (11), externally surrounding it, of the panels (1) of the first set of panels (A). In this way soil or water leaks from the compartment (V) of the plant pot (100) are prevented because the first horizontal groove (12) and the second horizontal groove (13) allow for fitting the panels (1) of the first set of panels (A) with the panels (1) of the second set of panels (B).

To form the side (P) it is therefore necessary to place the base platform (3) with the vertical pins (35) facing upwards. Successively, the panels (1) of the first set of panels (A) are inserted from above onto the base platform (3) in such manner to obtain the following couplings:
- coupling of a first panel (1) with the base platform (3), in such manner that the lower ending edge (11) of the panel (1) is recessed into said groove (32);
- coupling of a second panel (1) with the base platform (3) simultaneously obtaining the coupling between the coupling/uncoupling means (2, 4) provided on the vertical edges (10) of each panel (1),
- coupling of the vertical pins (35) of the base platform (3) with the holes (24) of the rods (20).

In order to obtain a plant pot (100) with multiple height compared to the height of the panels (1) of the first set of panels (A), it will be simply necessary to dispose one or more sets of panels (1) of the second set (B) between the base platform (3) and the first set of panels (A). According to this embodiment of the plant pot (100) with multiple height, the vertical pins (25) of the rods (20) of the panels (1) of the second set of panels (B) are engaged inside the holes (24) of the rods (20) of the panels (1) of the first set of panels (A), whereas the vertical pins (35) of the base platform (3) are engaged inside the holes (24) of the rods (20) of the panels (1) of the second set of panels (B).

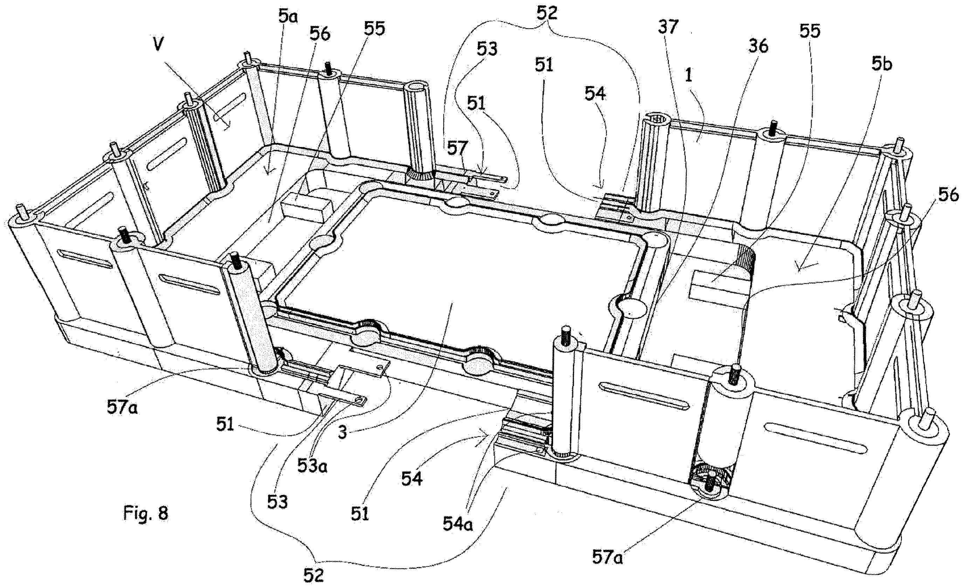

As shown in Fig. 8, the plant pot (100) optionally comprises a first and a second extension (5a, 5b) that are suitable for being coupled mutually and simultaneously to the base platform (3) in intermediate position between them, thus advantageously enlarging the width and the length of the plant pot (100) without replacing the entire plant pot (100).

Each extension (5a, 5b) has the same structure as the base platform (3) and is intended to be coupled with the panels (1) and with the coupling/uncoupling means (2, 4) in order to enlarge the compartment (V). In fact, each extension (5a, 5b) comprises a perimetric groove (57) whereon a spaced set of circular housings (57a) is obtained, in such manner that, when a panel (1) is inserted from above and is fixed to the extension (5a, 5b), the lower ending edge (11) of the panels (1) is exactly housed in the perimetric groove (57), whereas the lower ending section of each tubular element (41) is exactly housed in said circular housings (57a).

Each extension (5a, 5b) is shaped as a fork, in particular with a U-shape, and comprises a transverse edge (56) intended to be engaged against a transverse edge (36) of the base platform (3), as well as two transverse ending edges (51) intended to be engaged against the transverse ending edges (51) of the other extension.

When the extensions (5a, 5b) are coupled to the base platform (3), the distance between the circular housing (57a) that is closer to the transverse ending edge (51) of an extension and the circular housing (57a) that is closer to the transverse ending edge (51) of the other extension is equal to the length of one panel (1).

The extensions (5a, 5b) are provided with connection means (52) to join the extensions (5a, 5b) mutually, as well as to join each extension (5a, 5b) to the base platform (3). The connection means (52) are of male-female coupling type and comprise teeth (53) that protrude from the transverse ending edge (51) of the first extension (5a) and are intended to be inserted into housings (54) disposed on the transverse ending edge (51) of the second extension(5b).

The connection means (52) comprise second teeth (55) that protrude from the transverse edge (56) of each extension (5a, 5b) and are intended to be inserted into housings (37) disposed on the transverse edges (36) of the base platform (3).

In order to provide a stable coupling between the first extension (5a) and the second extension (5b) lock pins are provided and fitted into holes (53a) of the teeth (53) of the first extension (5a) and into cavities (54a) provided in the housings (54) of the second extension (5b).

In order to enlarge the base platform (3) of the plant pot (100) it is necessary to remove the panels (1) and the coupling/uncoupling means (2, 4) fixed to the base platform (3), as well as to dispose each extension (5a, 5b) on two opposite sides of the base platform (3), in such manner to couple the teeth (53) of the first extension (5a) with the housings (54) of the second extension (5b) and to insert the second teeth (55) of each extension (5) into the housings (37) of the base platform.

After coupling the extensions (5a,5b) and the base platform (3), the assembly process continues mounting the panels (1) in an ordered sequence along the perimeter of the extensions (5a, 5b).

During this operating step, one panel (1) must be mounted astride the transverse ending edges (51) of each extension.

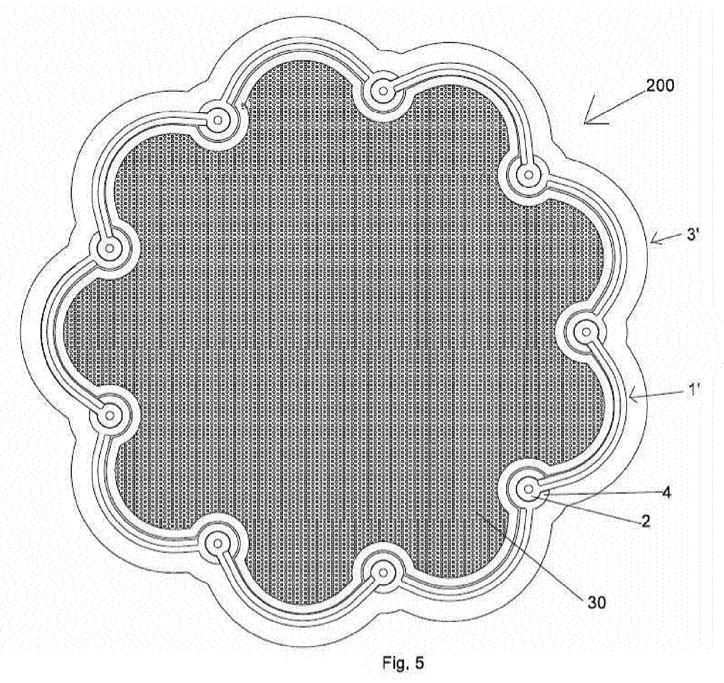

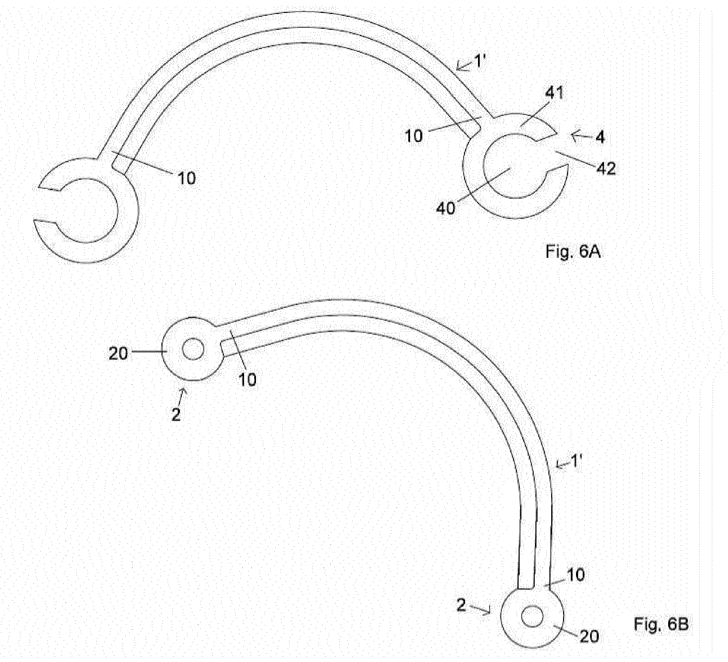

Figs. 5, 6A and 6B show a second embodiment of the plant pot (200), wherein the base platform (3') has a substantially circular curved shape. In such a case, the panels (1') differ from the ones describe above only in that they have a curved profile instead of a rectilinear one. As a matter of fact, the reference numerals used in Fig. 5 are identical to the ones used in the preceding figures to distinguish the coupling/uncoupling means (2, 4).

Because of the coupling/uncoupling means (2, 4) the panels (1) can be detached in order to remove the soil contained in the compartment (V) of the plant pot (100) and replace it with new soil.

Moreover, the depth of the plant pot (100) can be increased by stacking the panels (1) one on top of the other, without having to replace the entire pot and without stressing the plant.

Evidently, also the base platform (3) with circular curved shape can be enlarged by means of an opposite pair of extensions having a fork-shape, in particular a semicircular fork-shape.

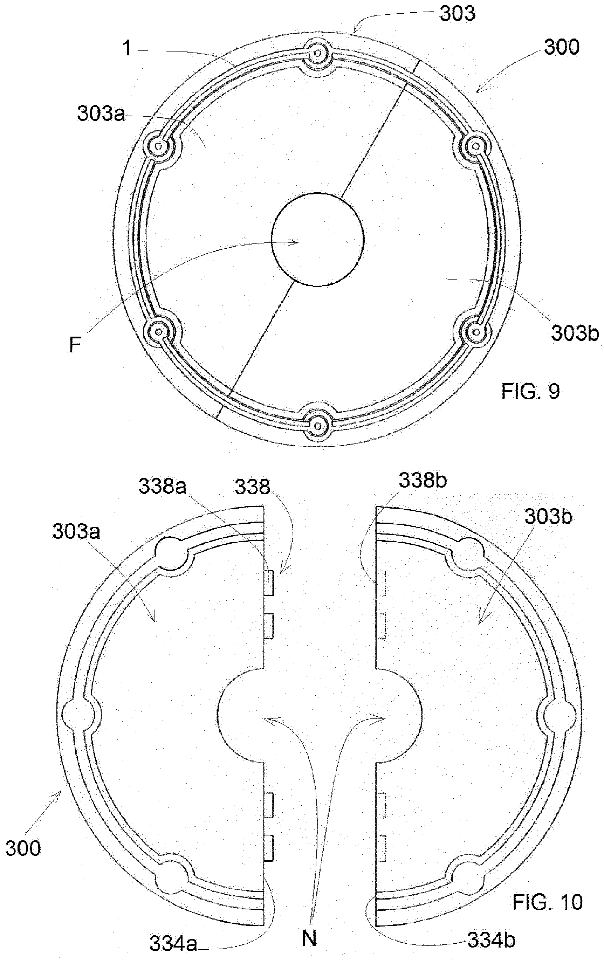

Figs. 9 and 10 show an additional embodiment of the plant pot of the invention, which is generally indicated with reference numeral 300.

Identical elements or elements that correspond to the ones illustrated above are indicated with the same reference numerals, omitting a detailed description.

The base platform (303) of the pot (300) comprises a first portion (303a) and a second portion (303b) that can be joined with coupling/uncoupling means (338).

Each portion (303a; 303b) has a semicircular shape in such manner that a base platform (303) with circular shape is obtained by joining the two portions (303a, 303b). Alternatively, the portions (303a, 303b) can have a different shape, for example a quadrangular, trapezoidal or triangular shape, in such manner to obtain base platforms (303) of different shapes.

Each portion (303a, 303b) comprises an ending edge (334**a**, **334b**) stopped against the ending edge of the other portion. Each portion (303a, 303b) of the base platform (303) comprises an inlet (N) obtained in correspondence of a central line of the relevant ending edge (334**a, 334b**), as shown in Fig. 10. When the portions (303a, 303b) of the base platform (303) are joined, the inlet (N) of each portion (303a, 303b) is disposed in correspondence of the inlet (N) of the other portion, in such manner to form a circular hole (F) intended to house a branch of a plant, as shown in Fig. 9.

The coupling/uncoupling means (**338**) are disposed on the ending edge (334) of the portions (303a, 303b) in order to join the two portions (303a, 303b). In particular, as shown in Fig. 10, the coupling/uncoupling means (**338**) comprise teeth (338a) disposed on the ending edge (334**a**) of the first portion (303a), as well as housings (338b) obtained in correspondence of the ending edge (334**b**) of the second portion (303b). The teeth (338a) are intended to be coupled with the housings (338b) in order to join the two portions (303a, 303b).

In order to allow for multiplying a plant, the two portions (303a, 303b) of the base platform (303) can be joined in correspondence of a branch, in such manner that the branch is disposed in the circular hole (F) of the base platform (303). Then, the panels (1) are joined to the base platform (303) in order to generate the compartment intended to contain the soil.

In view of the above, by cutting into the branch and placing the soil in the pot (300), roots can be formed from the branch.

Successively, the branch can be cut in correspondence of a lower surface of the base platform (303), in such manner to separate the branch with the roots from the rest of the generating plant and obtain a new plant.

The advantages of such an embodiment of the plant pot (300) of the invention are evident, wherein because of the provision of a base platform (303) that comprises two portions (303a, 303b) and one circular hole, it is possible to multiply a plant easily without damaging the new plant. In fact, the branch is already placed inside the pot (300), even before separating the branch from the generating plant; consequently, the new plant does not need to be transferred to another pot as in the prior art. This avoids exposing the roots of the new plant to the air and handling the new plant with the risk of damaging the plant.

## Claims

1. Plant pot (100; 200; 300) with modular structure for growing plants, comprising:
- a side (P) that laterally defines a compartment (V) containing the soil for growing the plants;
- at least two panels (1) for obtaining said side (P), which are removably joined;
- coupling/uncoupling means (2, 4) to couple and uncouple said at least two panels (1),
wherein
each panel (1) has two vertical ending edges (10); said coupling/uncoupling means (2, 4) being provided in correspondence of the vertical ending edges (10) of said panels.
the coupling/uncoupling means (2, 4) comprise first coupling means (2) coupled with second coupling means (4); said first coupling means (2) being provided on a vertical ending edge (10) of a panel (1) and said second coupling means (4) being provided on a vertical ending edge (10) of an additional panel (1) in adjacent position to the first one;
the first coupling means (2) comprise a rod (20) and the second coupling means (4) comprise a housing (40) that receives the rod (20);
**characterized in that**
each rod (20) of the first coupling means comprises a hole (24) in lower position;
the plant pot comprising a base platform (3; 3'; 303) coupled with said panels (1) of the side (P) to define said compartment (V) on the bottom; said base platform (3; 3'; 303) comprising vertical pins (35) in upper perimetral position that protrude upwards and are engaged in said holes (24) of the rods (20).

2. The plant pot (100; 200; 300) of claim 1, wherein said housing (40) coincides with the internal channel of a tubular element (41).

3. The plant pot (100; 200; 300) of claim 2, wherein the tubular element (41) of the second coupling means (4) comprises a longitudinal cut (42) with width (L) equal to the thickness (S) of the panel (1).

4. The plant pot (100; 200; 300) of anyone of the preceding claims, wherein the base platform (3; 3'; 303) comprises:
- a groove (32) obtained in upper position to house lower ending edges (11) of the panels (1);
- a spaced set of circular housings (32a) obtained in correspondence of said groove (32) to house a lower ending section of each second coupling means (4).

5. The plant pot (100; 200; 300) of claim 4, wherein the base platform (3; 3'; 303) is covered by a dense set of draining holes (30).

6. The plant pot (300) of any one of the preceding claims, wherein said base platform (303) comprises:
- a first portion (303a) with an ending edge (334a) comprising an inlet (N);
- a second portion (303b) with an ending edge (334b) engaged against the ending edge (334a) of the first portion (303a); said ending edge (334b) of the second portion (303b) comprising an inlet (N) disposed in correspondence of the inlet (N) of the first portion (303a) in such manner to form a circular hole (F) intended to house a branch of a plant;
- coupling/uncoupling means (338) disposed on the ending edge (334a, 334b) of the portions (303a, 303b) in order to join the two portions (303a, 303b).

7. The plant pot (100; 200; 300) of any one of the preceding claims, comprising at least a first and a second extension (5a, 5b) fixed on opposite sides to the base platform (3; 3'; 300) in order to enlarge the length and the width of the base platform (3; 3'; 303); each extension (5a, 5b) being shaped as a fork and comprising:
- a perimetric groove (57) obtained in upper position to house the lower ending edges (11) of the panels (1);
- a spaced set of circular housings (57a) obtained in correspondence of said perimetric groove (57) to house a lower ending section of each second coupling means (4).

8. The plant pot (100, 200; 300) of claim 7, wherein each extension (5a, 5b) comprises connection means (52) for joining the extension (5) mutually and for joining said extensions (5) to the base platform (3; 3'; 300).

9. The plant pot (100; 200; 300) of claim 8, wherein said connection means (52) comprise teeth (53) that protrude from a transverse ending edge (51) of the first extension (5a) and are intended to be inserted into housings (54) disposed in correspondence of the transverse ending edge (51) of the second extension (5b); said connection means (52) comprising second teeth (55) that protrude from a transverse edge (56) of each extension (5) and are intended to be inserted into housings (37) disposed in correspondence of transverse edges (36) of the base platform (3; 3'; 303); said blocking means comprising lock pins fitted into holes (53a) of the teeth (53) of the first extension (5a) and into cavities (54a) provided in the housings (54) of the second extension (5b).

10. The plant pot (100; 200; 300) of any one of the preceding claims, comprising at least one first set of panels (A) and at least one second set of panels (B) disposed and fixed under the first set of panels (A), where the first set of panels (A) is configured as the panels (1) claimed from 1 to 10 and where the panels (1) of the second set of panels (B) differ from the panels (1) of the first set of panels (A) in that they are provided with rods (20) provided in upper position with a vertical pin (25) with the same diameter as the hole (24) obtained at the base of said rods (20).

## Patentansprüche

1. Blumentopf (100; 200; 300) mit modularer Struktur zum Züchten von Pflanzen, umfassend:
- eine Seitenwand (P), die einen Innenraum (V) begrenzt, der die Blumenerde zum Züchten der Pflanzen enthält;
- mindestens zwei Platten (1) zum Erhalten der Seitenwand (P), die lösbar mit einander verbunden sind;
- Kopplungs-/Entkopplungsmittel (2, 4) zum Koppeln und Entkoppeln der mindestens zwei Platten (1);
wobei jede Platte (1) zwei vertikale Endkanten (10) aufweist; wobei die Kopplungs-/Entkopplungsmittel (2, 4) an den Endkanten (10) der Platten vorgesehen sind;
wobei die Kopplungs-/Entkopplungsmittel (2, 4) erste Kopplungsmittel (2) umfassen, die mit zweiten Kopplungsmitteln (4) gekoppelt sind; wobei die ersten Kopplungsmittel (2) an einer vertikalen Endkante (10) einer Platte (1) vorgesehen sind und die zweiten Kopplungsmittel (4) an einer vertikalen Endkante (10) einer weiteren, in benachbarter Position zur ersten befindlichen Platte (1) vorgesehen sind;
wobei die ersten Kopplungsmittel (2) eine Stange (20) umfassen und die zweiten Kopplungsmittel (4) einen Sitz (40) umfassen, der die Stange (20) aufnimmt;
**dadurch gekennzeichnet, dass**
jede Stange (20) der ersten Kopplungsmittel eine unterseitige Bohrung (24) umfasst;
der Blumentopf eine Basisplattform (3; 3'; 303) umfasst, die mit den Platten (1) der Seitenwand (P) gekoppelt ist, um den Innenraum (V) am Boden zu definieren; wobei die Basisplattform (3; 3'; 303) oberseitig rundum angeordnete, vertikale Stifte (35) umfasst, die nach oben überstehen und die Bohrungen (24) der Stangen (20) in Eingriff nehmen.

2. Blumentopf (100; 200; 300) nach Anspruch 1, wobei der Sitz (40) mit dem inneren Kanal eines rohrförmigen Elements (41) zusammenfällt.

3. Blumentopf (100; 200; 300) nach Anspruch 2, wobei das rohrförmige Element (41) der zweiten Kopplungsmittel (4) einen längslaufenden Schnitt (42) umfasst, dessen Breite (L) gleich der Dicke (S) der Platte (1) ist.

4. Blumentopf (100; 200; 300) nach einem der vorstehenden Ansprüche, wobei die Basisplattform (3; 3'; 303) Folgendes umfasst:
- eine Nut (32), die oberseitig herausgearbeitet ist, um die unteren Kanten (11) der Platten (1) aufzunehmen;
- eine Reihe von voneinander beabstandeten kreisförmigen Sitzen (32a), die an der Nut (32) herausgearbeitet sind, um einen unteren Endabschnitt eines jeden zweiten Kopplungsmittels (4) aufzunehmen.

5. Blumentopf (100; 200; 300) nach Anspruch 4, wobei die Basisplattform(3; 3'; 303) mit einer dichten Reihe von Dränagelöchern (30) bedeckt ist.

6. Blumentopf (300) nach einem der vorstehenden Ansprüche, wobei die Basisplattform (303) Folgendes umfasst:
- einen ersten Abschnitt (303a) mit einer Endkante (334a), die eine Einbuchtung (N) umfasst;
- einen zweiten Abschnitt (303b) mit einer Endkante (334b), die gegen die Endkante (334a) des ersten Abschnitts (303a) anliegt; wobei die Endkante (334b) des zweiten Abschnitts (303b) eine Einbuchtung (N) umfasst, die an der Einbuchtung (N) des ersten Abschnitts (303a) derart angeordnet wird, dass eine kreisförmige Bohrung (F) gebildet wird, die geeignet ist, einen Zweig einer Pflanze aufzunehmen;
- Kopplungs-/Entkopplungsmittel (338), die an der Endkante (334a, 334b) der Abschnitte (303a, 303b) angeordnet sind, um zwei Abschnitte (303a, 303b) miteinander zu verbinden.

7. Blumentopf (100; 200; 300) nach einem der vorstehenden Ansprüche, umfassend mindestens eine erste und eine zweite Verlängerung (5a, 5b), die an gegenüberliegenden Seiten an der Basisplattform (3; 3'; 300) befestigt sind, um die Länge und die Breite der Basisplattform (3; 3'; 303) zu vergrößern; wobei jede Verlängerung (5a, 5b) wie eine Gabel geformt ist und Folgendes umfasst:
- eine umlaufende Nut (57), die oberseitig herausgearbeitet ist, um die unteren Kanten (11) der Platten (1) aufzunehmen;
- eine Reihe von voneinander beabstandeten, kreisförmigen Sitzen (57a), die an der Nut (57) herausgearbeitet sind, um einen unteren Endabschnitt eines jeden zweiten Kopplungsmittels (4) aufzunehmen.

8. Blumentopf (100, 200; 300) nach Anspruch 7, wobei jede Verlängerung (5a, 5b) Verbindungsmittel (52) zur gegenseitigen Verbindung der Verlängerungen (5) aneinander und zur Verbindung der Verlängerungen (5) mit der Basisplattform (3; 3'; 300) umfasst.

9. Blumentopf (100; 200; 300) nach Anspruch 8, wobei die Verbindungsmittel (52) Zähne (53) umfassen, die aus einer querlaufenden Endkante (51) der ersten Verlängerung (5a) hervorstehen und dazu geeignet sind, in Aufnahmesitze (54) einzufallen, die an der querlaufenden Endkante (51) der zweiten Verlängerung (5b) angeordnet sind; wobei die Verbindungsmittel (52) zweite Zähne (55) umfassen, die aus einer querlaufenden Kante (56) einer jeden Verlängerung (5) hervorstehen und dazu geeignet sind, in Aufnahmesitze (37) einzufallen, die an querlaufenden Kanten (36) der Basisplattform (3; 3'; 303) angeordnet sind; wobei die Sperrmittel Sperrstifte umfassen, die in Bohrungen (53a) der Zähne (53) der ersten Verlängerung (5a) und in Hohlräume (54a) eingepasst sind, die in den Aufnahmesitzen (54) der zweiten Verlängerung (5b) vorgesehen sind.

10. Blumentopf (100; 200; 300) nach einem der vorstehenden Ansprüche, umfassend mindestens eine erste Reihe von Platten (A) und mindestens eine zweite Reihe von Platten (B), die unterhalb der ersten Reihe von Platten (A) angeordnet und befestigt sind, wobei die erste Reihe von Platten (A) und wie die von 1 bis 10 beanspruchten Platten (1) ausgebildet ist und die zweite Reihe von Platten (B) sich von den Platten (1) der ersten Reihe von Platten (A) darin unterscheidet, dass sie mit Stangen (20) versehen sind, die oberseitig mit einem vertikalen Stift (25) versehen sind, dessen Durchmesser gleich der Bohrung (24) ist, die an der Basis der Stangen (20) herausgearbeitet ist.

## Revendications

1. Vase (100; 200; 300) ayant structure modulaire composable pour cultiver des plantes, comprenant :
- un rebord latéral (P) qui délimite latéralement un compartiment (V) contenant la terre pour cultiver des plantes ;
- au moins deux panneaux (1) pour la réalisation du dit bord latéral (P) qui sont reliés de manière amovible entre eux ;
- des moyens d'accrochage/décrochage (2, 4) pour accrocher et décrocher les dits au moins deux panneaux (1) ;
où chaque panneau (1) a deux bords d'extrémité verticaux (10) ; lesdits moyens d'accrochage/décrochage (2, 4) étant prévus en correspondance des bords d'extrémité verticaux (10) des dits panneaux ;
les moyens d'accrochage/décrochage (2, 4) comprennent des premiers moyens d'accouplement (2) couplés à des deuxièmes moyens d'accouplement (4) ; lesdits premiers moyens d'accouplement (2) étant prévus sur un bord d'extrémité vertical (10) d'un panneau (1) et lesdits deuxièmes moyens d'accouplement (4) étant prévus sur un bord d'extrémité vertical (10) d'un panneau supplémentaire (1) adjacent au premier.
Les premiers moyens d'accouplement (2) comprennent une tige (20) et les deuxièmes moyens d'accouplement (4) comprennent un logement (40) qui reçoit la tige (20) ;
**caractérisé en ce que**
chaque tige (20) des premiers moyens d'accouplement comprend inférieurement un orifice (24) ;
le vase comprend une plate-forme de base (3; 3'; 303) qui se couple avec lesdits panneaux (1) du rebord latéral (P) pour définir inférieurement ledit compartiment (V) ; ladite plate-forme de base (3; 3'; 303) comprenant supérieurement et sur le périmètre des goujons à axe vertical (35) qui débordent vers le haut et qui s'engagent dans lesdits orifices (24) des tiges (20).

2. Vase (100; 200; 300) selon la revendication 1, où ledit logement (40) coïncide avec le canal interne d'un élément tubulaire (41).

3. Vase (100; 200; 300) selon la revendication 2, où l'élément tubulaire (41) des deuxièmes moyens d'accouplement (4) comprend une coupure longitudinale (42) dont la largeur (L) est égale à l'épaisseur (S) du panneau (1).

4. Vase (100; 200; 300) selon l'une quelconque des revendications précédentes, où la plate-forme de base (3; 3'; 303) comprend :
- une rainure (32), réalisée supérieurement pour loger les bords inférieurs (11) des panneaux (1) ;
- une série espacée de sièges circulaires (32a) réalisés en correspondance de ladite rainure (32) pour loger un segment terminal inférieur de chaque moyen d'accouplement (4).

5. Vase (100; 200; 300) selon la revendication 4, où la plate-forme de base (3; 3'; 303) est parsemée d'une dense série d'orifices (30) de drainage.

6. Vase (300) selon l'une quelconque des revendications précédentes, où ladite plate-forme de base (303) comprend :
- une première portion (303a) ayant un bord d'extrémité (334a) comprenant une baie (N) ;
- une seconde portion (303b) ayant un bord d'extrémité (334b) disposé en butée contre le bord d'extrémité (334a) de la première portion (303a) ; ledit bord d'extrémité (334b) de la seconde portion (303b) comprenant une baie (N), disposée en correspondance de la baie (N) de la première portion (303a), de manière à former un orifice circulaire (F) apte à loger une branche d'une plante ;
- des moyens d'accrochage/décrochage (338) disposés sur le bord d'extrémité (334a, 334b) des portions (303a, 303b) pour relier ensemble les deux portions (303a, 303b).

7. Vase (100; 200; 300) selon l'une quelconque des revendications précédentes, comprenant au moins une première et une deuxième rallonges (5a, 5b) fixées, sur des côtés opposés, à la plate-forme de base (3; 3'; 300) pour agrandir la longueur et la largeur de la plate-forme de base (3; 3'; 303) ; chaque rallonge (5a, 5b) ayant la forme d'une fourche et comprenant :
- une rainure de périmètre (57) réalisée supérieurement pour loger les bords inférieurs (11) des panneaux (1) ;
- une série espacée de logements circulaires (57a), réalisés en correspondance de ladite rainure de périmètre (57) pour loger un segment terminal inférieur de chaque deuxième moyen d'accouplement (4).

8. Vase (100, 200; 300) selon la revendication 7, où chaque rallonge (5a, 5b) comprend des moyens de connexion (52) pour connecter les rallonges (5) entre elles et pour connecter lesdites rallonges (5) à la plate-forme de base (3; 3'; 300).

9. Vase (100; 200; 300) selon la revendication 8, où lesdits moyens de connexion (52) comprennent des dents (53) qui débordent d'un bord transversal d'extrémité (51) de la première rallonge (5a) et qui sont aptes à s'enfiler dans des logements (54) disposés en correspondance du bord transversal d'extrémité (51) de la deuxième rallonge (5b) ; lesdits moyens de connexion (52) comprenant des secondes dents (55) qui débordent d'un bord transversal (56) de chaque rallonge (5) et qui sont aptes à s'enfiler dans des logements (37) disposés en correspondance de bords transversaux (36) de la plate-forme de base (3; 3'; 303) ; lesdits moyens de blocage comprenant des broches de blocage enfilées à encastrement dans des orifices (53a) des dents (53) de la première rallonge (5a) et dans des cavités (54a) prévues dans les logements (54) de la deuxième rallonge (5b).

10. Vase (100; 200; 300) selon l'une quelconque des revendications précédentes, comprenant au moins une première série de panneaux (A) et au moins une deuxième série de panneaux (B), disposés et fixés en-dessous de la première série de panneaux (A), où la première série de panneaux (A) est conforme aux panneaux (1) revendiqués de 1 à 10 et où les panneaux (1) de la deuxième série de panneaux (B) diffèrent des panneaux (1) de la première série de panneaux (A) en ce qu'ils prévoient des tiges (20) dotées supérieurement d'un goujon vertical (25) dont le diamètre est égal à l'orifice (24) réalisé à la base des dites tiges (20).
